# EUROPEAN PATENT SPECIFICATION

(11) **EP 0 406 987 B1**
(45) Date of publication and mention of the grant of the patent: **12.01.1994**
(21) Application number: 90202389.4
(22) Date of filing: 14.03.1986
(51) Int. Cl.: B60L 5/20

(54) **Sliding plate support structure for current collector**
Schleifplattenstützstruktur für Stromabnehmer
Structure de support de plaques de frottement pour collecteur de courant

(30) Priority: 18.03.1985 JP 38726/85 U; 22.06.1985 JP 94561/85 U; 17.07.1985 JP 157685/85; 30.10.1985 JP 243616/85
(43) Date of publication of application: 09.01.1991
(62) Divisional of application: 86301867.7
(73) Proprietor: TOYO DENKI SEIZO KABUSHIKI KAISHA, Tokyo 104 (JP)
(72) Inventor: Kuwabara, Shigeo, c/o Technical Laboratory, Kamisoyanagi, Yamato City, Kanagawa Pref (JP)
(74) Representative: Driver, Virginia Rozanne

(56) References cited:
- FR-A- 2 201 989
- GB-A- 1 014 761
- GB-A- 1 416 349
- US-A- 1 370 018

## Description

This invention relates to a support structure comprising support members resiliently supporting a plurality of current collector pieces or sliding plates.

Such a support can be used in a current collector such as a pantograph for an electric car or tramcar.

A current collector (referred to hereinafter "pantograph") for an electric vehicle has been used for collecting electric current from trolley wires into the vehicle smoothly. In order to slide trolley wires on sliding plates mounted on bow shaped members, a framework of the pantograph for supporting the bow shaped member or members is urged toward the trolley wires by spring forces so as to force the sliding plates against the wires through the bow shaped members.

In the event of a vehicle running at high speeds or trolley wires arranged with insufficient accuracy, sliding portions of the pantograph may often lose contact with the wires to generate arcs. The generated arcs will directly shorten service life of sliding portions of the wires and the pantograph, and moreover cause radio interference in areas along a railway to the detriment of people living in the area. Accordingly, the occurrence of the arcs should be restrained as much as possible.

In order to prevent the arcs, it is needed to improve followability of the pantograph so as not to lose contact with the wires. For this purpose, attempts have been made to make the moving mass of the pantograph as small as possible.

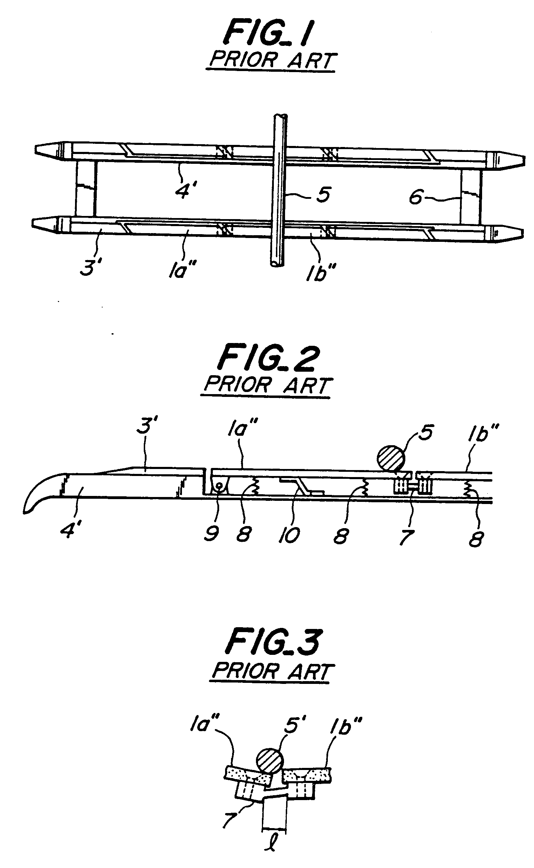

An example of improved followability will be explained with reference to Figures 1 to 3 of the accompanying drawings.

As shown in Figs. 1 and 2 of plan and side views, two bow shaped members 4' are usually connected by connecting arms 6 to form a unitary bow shaped member assembly which is mounted to a framework unit (not shown) through springs.

A plurality of current collector pieces in the form of sliding plates 1a'' and 1b'' in a row are supported through springs 8 on the one bow member. Auxiliary sliding plates 3' are fixed on upper surfaces of ends of the bow shaped member. One end of the sliding plate 1a'' at each end of the bow shaped member facing the auxiliary sliding plate 3' is pivotally movably connected to the bow shaped member 4' by means of a pin 9. The other end of the sliding plate 1a'' and one end of the intermediate sliding plate 1b'' adjacent thereto are connected by an elastic connecting member 7 to keep upper surfaces of all the sliding plates 1a'' and 1b'' in one plane. Shunts 10 extend from the respective sliding plates 1a'' and 1b'' to the bow member 4' for collecting current.

The bow shaped member assembly as above constructed is mounted on the framework unit (not shown) to force the sliding plates against trolley wires 5 by means of main springs (not shown).

The dynamic action of the sliding plates 1a'' and 1b'' and the trolley wires 5 in this arrangement will be explained. If the trolley wires 5 are arranged in parallel with the moving direction of the vehicle, the wires slide always on substantially the same portions of the sliding plates to cause concentrated wearing to form grooves. Accordingly, trolley wires are arranged zigzag and distances between the wires and rails on which the vehicle runs are maintained as constant as possible. However, it is impossible to keep the distance absolutely constant.

In actual fact, the trolley wires are caused to move reciprocally in longitudinal directions of the bow member relatively when the pantograph moves because of the zigzag arrangement of the wires, thereby keeping the surfaces of the sliding plates in contact with the wires to collect the electric current.

In order to improve the followability of the sliding plates 1a'' and 1b'' to the wires 5, the inertia of the sliding plates is made small to increase the following acceleration corresponding to the decrease of the mass. Accordingly, the sliding plates 1a'' and 1b'' are maintained following the trolley wires with the aid of the increased acceleration even if vibrations with larger amplitudes occur, so that smooth current collecting is effected without causing bad phenomena such as arcs.

In this manner, with the current collector as shown in Figs. 1 and 2, the sliding plates are divided into a plurality of plates 1a'' and 1b'' supported by the springs 8 so as to make light the portions in contact with trolley wires 5, thereby increasing the followability of the collector.

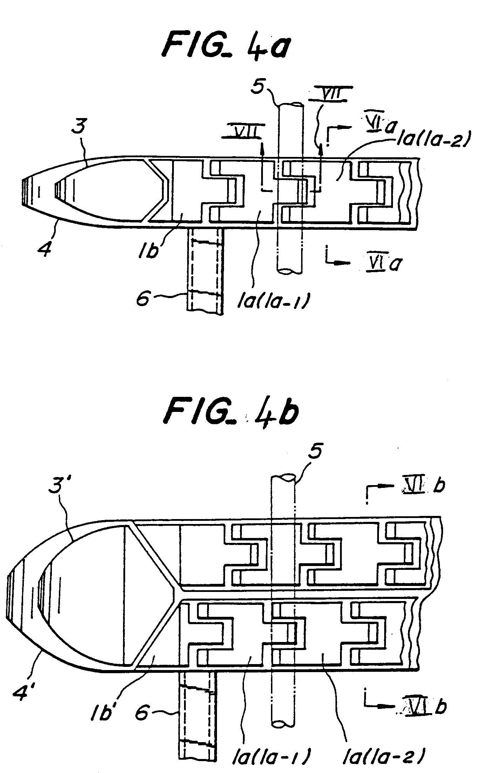

The above collector gives rise to two problems. The first problem is occurrence of difference in height between adjacent ends of the sliding plates 1a'' and 1b'' when a trolley wire moves from one to the other. As shown in Fig. 3, when the trolley wire 5 arrives at a tail end of the sliding plate 1a'', pressing force of the wire 5 directly exerts on the sliding plate 1a'', while the pressing force indirectly exerts on the sliding plate 1b'' through the elastic connecting member 7. If the connecting member 7 were completely rigid, the force acting upon the sliding plate 1a'' would be equally transmitted to the sliding plate 1b'' without causing any difference in height between adjacent ends of these plates. However, such a rigid connection therebetween would contradict the object of the divided light weight sliding plates. In order to dynamically separate masses of the adjacent sliding plates 1a'' and 1b'' as aimed in the above, the elastic connecting member 7 should be made of a material having very flexible spring characteristics. With such a flexible connecting member, however, the force acting upon the sliding plate 1a'' is not transmitted to the sliding plate 1b'', so that a great vertical difference between the sliding plates 1a'' and 1b'' is caused. Accordingly, the trolley wire 5 cannot be smoothly transferred from the sliding plate 1a'' to the sliding plate 1b''.

On the other hand, adjacent ends of the sliding plates 1a'' and 1b'' are formed angularly relative to the longitudinal directions of the bow members 4' to cause parts of the adjacent ends to be overlapped as shown in Fig. 1 in order to avoid the above great difference in height of the sliding plates. However, it cannot solve this problem.

The spring characteristics of the elastic connecting members 7 are determined by the relation between the sliding plates. At any rate, the flexiblity of the elastic connecting member 7 is needed. Therefore, the difference in height between the sliding plates directly and indirectly subjected to the pressing force cannot be avoided, and causes groove-shaped wearing at these ends and vibration resulting from the difference in height.

The second problem results from the fact that sizes of the divided sliding plates are not sufficiently small because of limitation by sizes of the other components, and the effect brought about by the division of the plates is substantially limited due to unavoidably increased masses of parts needed for the division of the plates.

In other words, as shown in Fig. 2, the elastic connecting member 7, springs 8, the pin 9, the shunt 10 and the like are necessary for supporting the sliding plates 1a'' and 1b''. Lengths of the sliding plates 1a'' and 1b'' cannot be shorter than a length which is the sum of longitudinal lengths of these members. Moreover, the reduction of widths of the sliding plates is limited owing to requirement of strength and constructional reason. Particularly, the elastic connecting member 7 cannot be shortened because it is absolutely needed to have an effective spring length ℓ owing to required spring characteristics in addition to required strength.

Accordingly, the sizes of the divided sliding plates 1a'' and 1b'' cannot be made small, and reversely the masses of the elastic connecting member 7, the spring 8, the pin 9, the shunt 10 and the like are increased, and there result, decreased reliability and increased cost.

FR-A-2201989 describes a current collector having a plurality of current collector pieces arranged along a bow-shaped support member, each current collector piece being secured by a respective support arrangement. Each support arrangement has an elastic body, a U-shaped leaf spring and a metallic support piece. Apart from the complexity of the support arrangements, the problems discussed above concerning the smooth transfer of wires from piece to piece remain.

Reference is also made to GB-A-1014761 which discloses a more complex type of follower, based on a pneumatic diaphragm to provide resilience. In this document, follower segments in a row may be arranged so that adjacent ends of adjacent segments are interconnected or interlocked.

It is a principal object of the invention to provide an improved sliding plate support structure for a current collector, which eliminates all the above disadvantages of the prior art.

It is a further object of the invention to provide a sliding plate support structure for a current collector, whose followability to current supply wires is improved by using very small units of divided sliding plate pieces and reducing masses of movement of the pieces while preventing the steps or differences in height at adjacent ends of the pieces and preventing groove-shaped wearing and vibration at the adjacent ends of the pieces.

According to the present invention there is provided a support structure for a current collector comprising: an elongate support member adapted to be carried by a travelling vehicle and with its length arranged transversely to the direction of travel of the vehicle; and a plurality of current collector pieces arranged in a common plane and spaced along the length of the support member and mounted thereon by a mounting structure arranged to bring the pieces into contact with a supply conductor for the vehicle, wherein the mounting structure comprises a sheet of electrically conductive and resilient material supported relative to the support member by a plurality of electrically conductive spring elements said sheet being secured to the spring elements and carrying the current collector pieces in such a manner that the current collector pieces can move independently perpendicularly to the plane of the current collector pieces characterised in that each current collector piece has a front edge and a rear edge when considered in the direction of the length of the support member, each of the front and rear edges having a recessed part and a projecting part with the recessed part of the front edge of one of the current collector pieces receiving the projecting part of the rear edge of an adjacent current collector piece to such an extent that the projecting parts of the front edge of said one current collector piece and of the rear edge of said adjacent current collector piece lie next to one another and are located to simultaneously contact the supply conductor so that in the transfer of the supply conductor between said one current collector piece and the adjacent current collector piece of the supply conductor does not lose contact with the current collector pieces and in that each projecting part has an outermost surface region which is inclined at an angle such that when the one current collector piece is tilted under pressure from the supply conductor the outermost surface region is located at a level corresponding to the level of the recessed part of the adjacent current collector piece so as to substantially eliminate differences in level as the current supply conductor moves from one current collector piece to its neighbour.

These and other objects, advantages, features, and uses will become more apparent as the description proceeds, when considered with the accompanying drawings in which:
Figure 1 is a plan view of bow shaped members of a current collector of the prior art;
Figure 2 is a side view of the bow shaped member shown in Figure 1;
Figure 3 is a partial enlarged side view of adjacent ends of sliding plates of the collector shown in Figure 1;
Figure 4a is a partial plan view of a further embodiment of the sliding plate support structure according to the invention;
Figure 4b is a partial plan view of a modification of the embodiment shown in Figure 4a;
Figure 5 is a side view of the structure shown in Figure 4a;
Figure 6a is a sectional view taken along lines VIa-VIa in Figures 4a and 5;
Figure 6b is a sectional view taken along the line VIb-VIb in Figure 4b;
Figure 7 is a sectional view taken along the line VII-VII in Figure 4a;
Figures 8 and 9 are enlarged sectional views illustrating adjacent ends of sliding pieces sliding with a trolley wire.

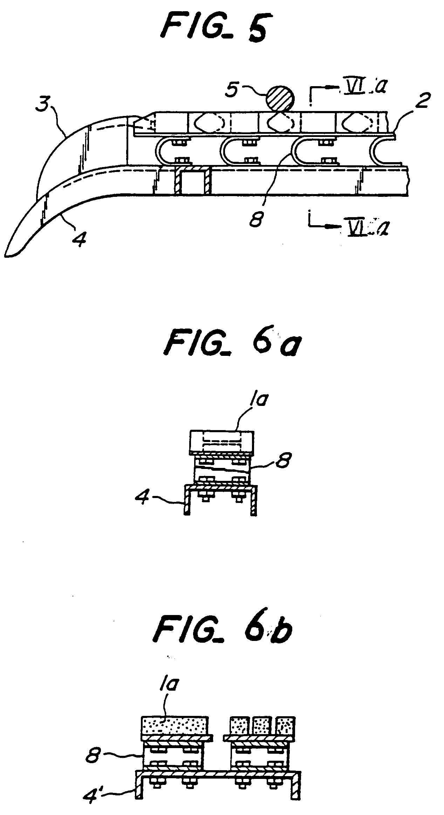

Figures 4-7 illustrate a current collector wherein a plurality of adjacent current collector pieces in the form of sliding plate pieces 1a and 1b are arranged in a row on a bow member 4 in its longitudinal direction through a leaf spring body 2 and respective U-shaped springs 8 in a resilient manner. Adjacent ends of the sliding plate pieces are formed on one end and the other end with projections and recesses so as to be fitted with each other with clearances when they are arranged in a row.

In other words, the adjacent sliding plate pieces are fixed to the leaf spring body 2 which is formed of a material which is resilient and electrically conductive, such as stainless steel, phosphor bronze, or the like so as to connect these sliding pieces by the leaf spring body 2. The leaf spring body 2 is resiliently supported by the conductive springs 8 corresponding to the sliding pieces on the bow member 4 to form a unitary body. In more detail, the two bow members (only one member shown) 4 are connected by connecting arms 6 to form a unitary body and mounted in a framework so as to press the sliding pieces on the bow members against trolley wires 5. The sliding plate pieces 1a and 1b are fixed to the elastic continuous stainless steel plate as by bolts. Although the stainless steel is used as the leaf spring body 2 in this embodiment, any other elastic material having stainless property and good electric conductivity may be used such as phosphor bronze. In this embodiment, the leaf spring body 2 is formed separately from an auxiliary sliding plate 3, but they may be integrally formed. Instead of the projections and recesses at the adjacent ends of the sliding plate pieces, castellated fitting may be used.

Fig. 4a illustrates a particular embodiment having only one row of sliding plate pieces and Fig. 4b illustrates two rows of the sliding plate pieces.

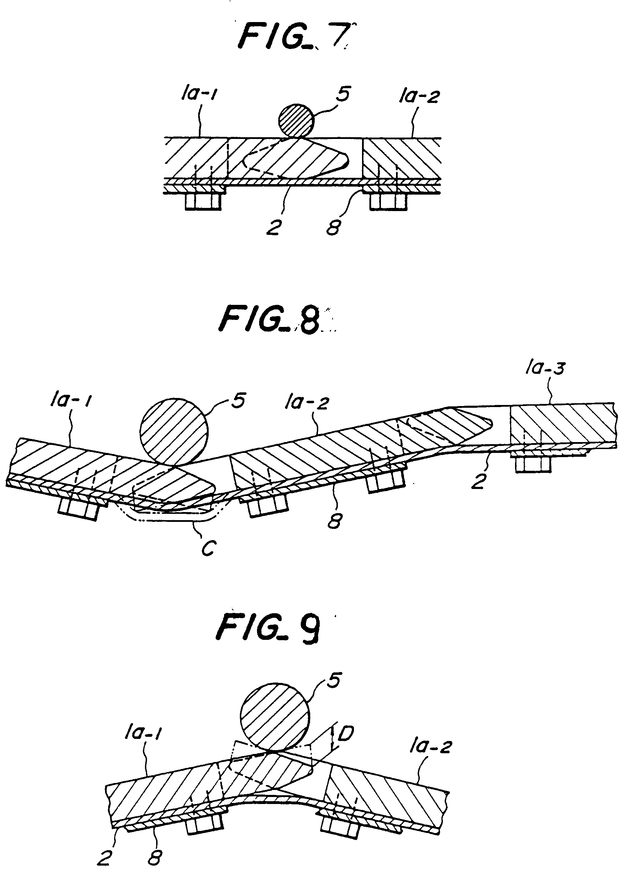

Thicknesses of the lapping portions of the sliding plate pieces will be explained with reference to Figs. 8 and 9 illustrating lowered sliding plate pieces and raised sliding plate pieces by the force of a trolley wire. Lengths of the projections and the recesses of the sliding plate pieces 1a-1 and 1a-2 are such that proper guidance of the pieces is achieved without undue clearances between adjacent ends of the pieces when a trolley wire 5 moves in longitudinal directions of the bow member with the aid of zigzag arrangement of the wire even if both the adjacent ends of the pieces are lowered or raised. Moreover, upper and lower surfaces at ends of the sliding pieces are inclined and distal ends are circularly chamfered or rounded. These dimensions and shapes are so determined that the inclination of the lower surfaces at the ends of the sliding pieces corresponds to the maximum inclined angles of the sliding pieces so as to make minimum the bending stresses acting upon the leaf spring body, for example, when both the ends of the sliding pieces are lowered as shown in Fig. 8 . If the lower surface at the end of the piece were not inclined, the lower edge of the end would be greatly lowered as at C to break the leaf spring body 2 adjacent thereto as shown in dot-and-dash lines in Fig. 8 .

The dimensions and shapes of the upper surfaces of the adjacent ends of the sliding plate pieces are so determined that when both the adjacent ends of the pieces are raised as shown in Fig. 9 , the inclination of the upper surfaces corresponds to the maximum inclined angles of the sliding pieces so as not to cause steps or difference in height and clearances. If the upper surfaces at the ends of the pieces were not inclined, upper edges of the ends would slide relative to each other to cause a step as at D which would obstruct the movement of the trolley wire 5 to cause vibration and arcing at the step.

It is important to determine the dimensions and configurations of the lapping portions of the sliding plate pieces so as to permit the trolley wire to move smoothly without causing steps, clearances and the like, even if both the adjacent ends of the pieces are lowered and raised when the wire 5 moves on the sliding pieces 1a and 1b in the longitudinal directions of the bow member. The sliding plate pieces 1a-1 and 1a-2 having the lapping portions thus constructed are fixed to the leaf spring body 2 as by bolts so as to connect these pieces by means of the leaf spring body 2. The springs 8 corresponding to the respective sliding pieces are fixed to the leaf spring body 2 by means of the above bolts and are fixed to the bow member by means of further bolts. In this manner, the respective sliding plate pieces 1a and 1b can be moved independently and are resiliently supported on the bow member 4. The outermost sliding plate piece 1b has an obliquely diverging outer end. The leaf spring body 2 has also an obliquely diverging outer end corresponding to the sliding piece 1b. An auxiliary sliding plate 3 is fixed to the bow member 4 and has a trapezoidal end mating with the obliquely diverging outer end of the outermost sliding plate piece 1b in order to achieve smooth movement of trolley wires 5 on these members. In this case, the wire 5 scarcely slides on the auxiliary sliding plate 3 beyond the outermost sliding plate pieces 1b.

Instead of the above construction, it is geometrically possible that the sliding plate pieces 1a-1 and 1a-2 are slightly spaced and hinged with each other by means of a pin below them. However, such a pin is likely to be worn off due to vibrations when moving. Moreover, as the maximum clearance between the sliding pieces is determined by inclined angles when adjacent ends of two sliding pieces are lowered, clearances and steps are caused to obstruct the movement of the wire 5 when the inclined angles are less than that corresponding to the maximum clearance. In contrast herewith the present invention achieves its object by a simple and very useful construction.

With the arrangement of this embodiment, the movement of the sliding pieces when the trolley wire moves thereon will be explained hereinafter.

Referring to Fig. 8 , assuming that both the adjacent ends of the sliding pieces 1a-1 and 1a-2 are lowered, when a trolley wire 5 has arrived at an end of the sliding plate piece 1a-1, the sliding surface of the sliding piece is subjected to pressing force, so that the sliding piece 1a-1 is obliquely depressed downwardly against the force of the spring 8. This oblique depression of the sliding piece is easily effected owing to the soft spring characteristics of the spring 8 with the aid of the pressing force from the wire being offset from the center of the leaf spring 8. The pressing force simultaneously acts on the adjacent end of the sliding plate piece 1a-2 because of the overlapping of two adjacent ends of the pieces. The sliding piece 1a-2 is also depressed without any step. Although the inclined angles of these pieces are changed, the overlapping portions of the sliding pieces serve to guide the trolley wires 5.

In this case, the movement of the wire 5 is smoothly effected without any separation of the wire, arc and vibration with the aid of good conditions that the sliding pieces 1a-1 and 1a-2 are connected by one leaf spring body 2 to facilitate the relative bending action of the pieces and the bending is effected in the same plane at a close position. In this case, sliding plate pieces correspond to the movement of the wire are limited to the sliding pieces 1a-1 and 1a-b in contact with the wire 5. Other sliding plate pieces (only one piece 1a-3 shown) arranged outside of the sliding plates 1a-1 and 1a-2 are connected by the leaf spring body 2 in a very soft or flexible manner and independently subjected to urging force. These other sliding plate pieces are maintained in horizontal positions under no-load condition. Accordingly, only the inertia masses of the inclined sliding pieces 1a-1 and 1a-2 control the dynamic movement. Such inertia masses are very small in comparison with those in the prior art whose bow member is moved together with members thereon. In other words, the following acceleration of the pantograph to the wires is increased corresponding to the decrease of the inertia masses if the pressing force is constant.

Fig. 9 illustrates both the adjacent ends of the sliding pieces 1a-1 and 1a-2 being raised. This is assumed that when the sliding pieces are retained in vibration after a trolley wire passed, the wire again arrives at raised ends of the sliding pieces. As the ends of the sliding pieces are overlapping, there is no clearance at the raised ends. The ends are inclined corresponding to those when the adjacent ends are lowered. Accordingly, the trolley wire 5 smoothly slides on the sliding pieces without having to overcome a step which would occur if the sliding pieces were shaped as shown in dot-and-dash lines at D. In this manner, the current collector performs its function without arc and separation of wire.

## Claims

1. A support structure for a current collector comprising: an elongate support member (4) adapted to be carried by a travelling vehicle and with its length arranged transversely to the direction of travel of the vehicle; and a plurality of current collector pieces (1a,1b,1c) arranged in a common plane and spaced along the length of the support member (4) and mounted thereon by a mounting structure (2) arranged to bring the pieces into contact with a supply conductor (5) for the vehicle, wherein the mounting structure comprises a sheet of electrically conductive and resilient material supported relative to the support member by a plurality of electrically conductive spring elements (8) said sheet (2) being secured to the spring elements (8) and carrying the current collector pieces in such a manner that the current collector pieces can move independently perpendicularly to the plane of the current collector pieces characterised in that each current collector piece has a front edge and a rear edge when considered in the direction of the length of the support member (4), each of the front and rear edges having a recessed part and a projecting part with the recessed part of the front edge of one of the current collector pieces receiving the projecting part of the rear edge of an adjacent current collector piece to such an extent that the projecting parts of the front edge of said one current collector piece and of the rear edge of said adjacent current collector piece lie next to one another and are located to simultaneously contact the supply conductor (5) so that in the transfer of the supply conductor between said one current collector piece and the adjacent current collector piece of the supply conductor (5) does not lose contact with the current collector pieces and in that each projecting part has an outermost surface region which is inclined at an angle such that when the one current collector piece is tilted under pressure from the supply conductor the outermost surface region is located at a level corresponding to the level of the recessed part of the adjacent current collector piece so as to substantially eliminate differences in level as the current supply conductor (5) moves from one current collector piece to its neighbour.

2. A support structure as set forth in claim 2, wherein upper and lower surfaces of distal ends of the projecting parts of said current collector pieces (1a,1b,1c) formed with said projections and recesses are founded.

3. A support structure as set forth in claim 1 or 2, wherein said spring elements (8) are U-shaped.

4. A support structure as set forth in claim 1, 2 or 3, wherein each elongate support member (4) carries only one row of said current collector pieces (1a,1b,1c).

## Patentansprüche

1. Schleifplatten-Stützstruktur für einen Stromabnehmer, mit einem verlängerten Stützteil (4), das angepaßt ist, um von einen sich bewegenden Fahrzeug getragen zu werden und dessen Länge quer zur Fahrtrichtung des Fahrzeugs angeordnet ist, und mit einer Anzahl Stromabnehmerteilen (1a, 1b, 1c), die in einer gemeinsamen Ebene angeordnet sind, entlang der Länge des Stützteils (4) verteilt und an diesem mittels einer Befestigungsstruktur (2) gehaltert sind, die angeordnet ist, um die Teile mit einer Versorgungsleitung (5) für den Wagen in Kontakt zu bringen, wobei die Befestigungsstruktur eine dünne Platte aus elektrisch leitendem und elastisch federndem Material aufweist, das bezüglich des Stützteils durch eine Anzahl elektrisch leitender Federelemente (8) gestützt ist, wobei die dünne Platte (2) an den Federelementen (8) festgehalten ist und die Stromabnehmerteile so trägt, daß die Stromabnehmerteile unabhängig voneinander senkrecht zu der Ebene der Stromabnehmerteile bewegbar sind, dadurch **gekennzeichnet,** daß jedes Stromabnehmerteil, in Längsrichtung des Stützteils (4) gesehen, einen vorderen und einen hinteren Rand hat, wobei jede der vorderen und hinteren Ränder einen ausgesparten und einen vorstehenden Teil hat, wobei der ausgesparte Teil des vorderen Randes einer der Stromabnehmerteile den vorstehenden Teil des hinteren Rands eines benachbarten Stromabnehmerteils in einen solchen Umfang aufnimmt, daß die vorstehenden Teile des vorderen Rands des Stromabnehmerteils und des hinteren Randes eines benachbarten Stromabnehmerteils am nächsten beieinander liegen und angeordnet sind, um gleichzeitig die Versorgungsleitung (5) zu berühren, so daß beim Transfer der Versorgungsleitung zwischen dem einen Stromabnehmerteil und dem beanchbarten Stromabnehmerteil der Versorgungsleitung (5) die Berührung mit den Stromabnehmerteilen nicht verloren geht, und daß jeder vorstehende Teil einen äußeren Oberflächenbereich hat, der unter einem Winkel geneigt ist, so daß, wenn ein Stromabnehmerteil unter dem Druck der Versorgungsleitung schräggestellt wird, der äußere Oberflächenbereich auf einem Niveau angeordnet ist, das dem Niveau des vorstehenden Teils des benachbarten Stromabnehmerteils entspricht, um im wesentlichen Niveauunterschiede auszugleichen, wenn sich die Versorgungsleitung (5) von einem Stromabnehmerteil zu dem benachbarten bewegt.

2. Stützstruktur nach Anspruch 2, bei welchem obere und untere Flächen entfernt liegender Enden der vorstehenden Teile der Stromabnehmerteile (1a, 1b, 1c) mit Vorsprüngen und Aussparungen versehen sind.

3. Stützstruktur nach Anspruch 1 oder 2, bei der die Federelemente (8) U-förmig sind.

4. Stützstruktur nach Anspruch 1, 2 oder 3, bei der jedes verlängerte Stützteil (4) nur eine Reihe der Stromabnehmerteile (1a, 1b, 1c) trägt.

## Revendications

1. Structure support d'un collecteur de courant comprenant : un élément support allongé (4) propre à être porté par un véhicule en déplacement et dont la longueur est disposée transversalement à la direction de déplacement du véhicule ; et une pluralité de pièces collectrices de courant (1a, 1b, 1c) disposées dans un plan commun et espacées selon la longueur de l'élément support (4) et montées sur celui-ci par une structure de montage (2) disposée pour amener les pièces en contact avec un conducteur d'alimentation (5) du véhicule, la structure de montage comprenant une feuille d'un materiau élastique et électriquement conducteur supportée par rapport à l'élément support par une pluralité d'éléments de ressort électriquement conducteurs (8), cette feuille (2) étant fixée aux éléments de ressort (8) et portant les pièces collectrices de courant de sorte que les pièces collectrices de courant peuvent se déplacer indépendamment perpendiculairement à leur plan, caractérisée en ce que chaque pièce collectrice de courant a un bord avant et un bord arrière quand on la considère dans la direction de la longueur de l'élément support (4), chacun des bords avant et arrière ayant une partie en évidement et une partie en saillie, la partie en évidement du bord avant d'une première pièce collectrice de courant recevant la partie en saillie du bord arrière d'une pièce collectrice de courant adjacente dans une mesure telle que les parties en saillie du bord avant de la première pièce collectrice de courant et du bord arrière de la pièce collectrice de courant adjacente reposent au voisinage l'une de l'autre et sont placées pour contacter simultanément le conducteur d'alimentation (5) de sorte que, lors du transfert du conducteur d'alimentation entre la première pièce collectrice de courant et la pièce collectrice de courant adjacente, le conducteur d'alimentation (5) ne perd pas le contact avec les pièces collectrices de courant, et en ce que chaque partie en saillie a une région de surface externe qui est inclinée d'un angle tel que, quand la première pièce collectrice de courant est inclinée sous la pression du conducteur d'alimentation, la région de surface externe est placée à un niveau qui correspond au niveau de la partie en évidement de la piece collectrice de courant adjacente de façon à éliminer sensiblement les différences de niveau tandis que le conducteur d'alimentation en courant (5) se déplace d'une piece collectrice de courant à la voisine.

2. Structure support selon la revendication 2 dans laquelle les surfaces supérieure et inférieure des extrémités distales des parties en saillie des pièces collectrices de courant (1a, 1b, 1c) formées avec lesdites parties en saillie et en évidement sont moulées.

3. Structure support selon la revendication 1 ou 2 dans laquelle les éléments de ressort (8) sont en forme de U.

4. Structure support selon la revendication 1, 2 ou 3 dans laquelle chaque élément support allongé (4) porte une seule rangée de pieces collectrices de courant (1a, 1b, 1c).
